Europäisches Patentamt

(19) European Patent Office

Office européen des brevets

(11) Veröffentlichungsnummer: **0 354 912 B1**

# (12) EUROPÄISCHE PATENTSCHRIFT

(45) Veröffentlichungstag der Patentschrift:
26.06.91 Patentblatt 91/26

(51) Int. Cl.[5]: **B01J 21/18**, B01D 53/36

(21) Anmeldenummer: 88903205.8

(22) Anmeldetag: 10.03.88

(86) Internationale Anmeldenummer:
PCT/EP88/00184

(87) Internationale Veröffentlichungsnummer:
WO 88/07410 06.10.88 Gazette 88/22

(54) **VERFAHREN ZUR HERSTELLUNG EINES KOHLENSTOFF-KATALYSATORS.**

(30) Priorität: 28.03.87 DE 3710272

(43) Veröffentlichungstag der Anmeldung:
21.02.90 Patentblatt 90/08

(45) Bekanntmachung des Hinweises auf die
Patenterteilung:
26.06.91 Patentblatt 91/26

(84) Benannte Vertragsstaaten:
DE GB NL

(73) Patentinhaber: Bergwerksverband GmbH
Franz-Fischer-Weg 61
W-4300 Essen 13 (DE)

(72) Erfinder: JÜNTGEN, Harald
Bonscheidter Str. 79
W-4300 Essen (DE)
Erfinder: KNOBLAUCH, Karl
Forsthausstrasse 22
W-4300 Essen (DE)
Erfinder: RICHTER, Ekkehard
Schmachtenbergstr. 89
W-4300 Essen 18 (DE)
Erfinder: KÜHL, Helmut
Steeler Str. 540
W-4300 Essen 14 (DE)

## Beschreibung

Die Erfindung betrifft ein Verfahren zur Herstellung eines Kohlenstoff-Katalysators für die $NO_x$-Reduktion mit Ammoniak, bei dem gemahlene und oxidierte Steinkohle mit Bindemitteln vermischt, geformt, bei Temperaturen zwischen 700 und 900°C geschwelt und anschließend mit Wasserdampf aktiviert wird.

Es ist aus der DE-A-24 33 076 bekannt, daß Aktivkohlen die Stickoxidreduktion unter Einsatz von Ammoniak katalysieren.

In der DE-A-35 12 168 wird offenbart, daß Aktivkokse, die nicht mit Wasserdampf aktiviert sind, die Reduktion der Stickoxide mit Ammoniak besser katalysieren als Aktivkohlen. Aber auch bei dem Einsatz von Aktivkoksen ist der Umsatz an NO noch vergleichsweise niedrig.

Der Erfindung liegt die Aufgabe zugrunde, einen Kohlenstoff-Katalysator herzustellen, der eine verbesserte katalytische Aktivität und somit einen erhöhten Umsatz an NO aufweist.

Diese Aufgabe wird dadurch gelöst, daß Aktivkokse mit Wasserdampf bei einer Temperatur von 800 bis 850°C und einer Verweilzeit von 45 bis 100 Minuten aktiviert werden, bis ein Aktivierungsgrad von 5 bis 15% erhalten wird. Der Aktivierungsgrad ist definiert als der Gewichtsverlust an Kohlenstoff in Prozent, bezogen auf das Gewicht des Ausgangsmaterials. In Versuchen hat sich nämlich überraschend herausgestellt, daß solche Kohlenstoff-Katalysatoren einen höheren $NO_x$-Umsatz aufweisen, als nicht aktivierte Aktivkokse und als Aktivkohlen, mit einem Aktivierungsgrad über 15%.

Die auf diese Weise hergestellten Kohlenstoff-Katalysatoren weisen eine zufallige mittlere Reflexion $\overline{R}_r$ zwischen 4,5 und 5,5% auf. Die Bestimmung der zufälligen mittleren Reflexion (mean randomreflectance) $\overline{R}_r$ (%) von Kohlen und Kohlenstoff-katalysatoren erfolgt mit einem "T.A.S." der Firma Leitz in Anlehnung nach DIN 22 020 (T.A.S. = Textur Analysen System). Es handelt sich hierbei um das arithmetische Mittel der Reflexionswerte der zufällig geschnittenen und hochglanzpolierten Katalysatorkörner, die in einem Kunstharz eingebunden sind.

Aufgenommen werden bei dieser Bestimmung 250 Bildflächen zu jeweils 512 mal 512 Bildpunkten. Das sind insgesamt über 65 Millionen einzelne Meßwerte, die die Reflexionsverteilung ergeben. Aus dieser berechnet sich das arithmetische Mittel der zufälligen mittleren Reflexion $\overline{R}_r$(%). Dieses Verfahren wird üblicherweise in der Kohlepetrographie eingesetzt. Als Inkohlung bezeichnet man den Vorgang, bei dem das ursprünglich sedimentierte Pflanzenmaterial über Torf in Braunkohle und in Steikohle umgewandelt wird. Das jeweilige Stadium, das die Kohle im Verlauf der Inkohlung erreicht hat, wird als Inkohlungsgrad bezeichnet. Der Inkohlungsgrad ist keine direkt meßbare Größe. Daher muß eine bestimmte physikalische oder chemische Eigenschaft gemessen werdne, die sich im Laufe der Inkohlung kontinuierlich verändert hat, z.B. der Reflexionsgrad des Vitrinits.

Überraschenderweise hat sich gezeigt, daß auch die prägraphitische Kristallstruktur der Kohlenstoffkatalysatoren durch diese Methode näher charakterisiert werden kann. Es wurde gefunden, daß Kohlenstoffkatalysatoren mit einer mittleren zufälligen Reflexion von 4,5 bis 5,5% besonders hohe katalytische Aktivität zeigen, so daß damit besonders günstige $NO_x$-Umsätze erzielbar sind, die über denen der mit nicht aktivierten Aktivkoksen und der Aktivkohlen erzielbaren Umsätze liegen.

Beispiel

Ein Aktivkoks wird in bekannter Weise hergestellt, indem gemahlene und oxidierte Steinkohle mit Bindemitteln vermischt, geformt und bei Temperaturen zwischen 700 und 900°C geschwelt wird. Dieser Aktivkoks wird anschließend in einer Wirbelschicht bei Temperaturen zwischen 800 und 900°C mit Wasserdampf aktiviert. Die Verweilzeiten und die Temperaturen in Abhängigkeit von dem Aktivierungsgrad sind in der nachstehenden Tabelle 1 aufgeführt.

EP 0 354 912 B1

Tabelle 1

| Verweilzeit (min) | Temperatur (°C) | Aktivierungsgrad (%) |
|---|---|---|
| 45 | 800 | 5,0 |
| 80 | 800 | 9,0 |
| 80 | 850 | 12,0 |
| 100 | 850 | 15,0 |
| 30 | 900 | 19,0 |
| 70 | 900 | 50,0 |
| 90 | 900 | 65,0 |

Die im Beispiel hergestellten Kohlenstoff-Katalysatoren werden in einen Reaktor mit einem Durchmesser von 55 mm und einer Höhe von 400 mm auf ihre katalytische Aktivität bei der $NO_x$-Reduktion mit Ammoniak getestet. Die Versuchstemperatur liegt bei 100°C, die Eingangskonzentrationen betragen :

$$780 \ vpm \quad NO$$
$$800 \ vpm \quad NH_3$$
$$6 \ Vol.-\% \quad O_2$$
$$10 \ Vol.-\% \quad H_2O$$
Rest Stickstoff

Die Verweilzeit des Gases in dem Reaktor beträgt 6 sec, bezogen auf das Gas im Normalzustand. Von den Katalysatoren wurde außerdem noch die zufällige mittlere Reflexion $\overline{R}_r$ nach DIN 22020 gemessen. Die Ergebnisse sind in der folgenden Tabelle 2 zusammengefaßt.

Tabelle 2

| Aktivierungsgrad (%) | $\overline{R}_r$ (%) | $U_{NO}$ (%) | |
|---|---|---|---|
| 0 | 5,2 | 62 | Aktivkoks |
| 5,0 | 5,5 | 73 | |
| 9,0 | 5,1 | 70 | |
| 12,0 | 4,9 | 70 | Kohlenstoff-Katalysator |
| 15,0 | 4,5 | 68 | |
| 19,0 | 4,1 | 59 | |
| 50,0 | 3,6 | 55 | Aktivkohle |
| 65,0 | 3,4 | 48 | |

Die Versuche belegen, daß die katalytische Aktivität, gemessen durch den Umsatz an NO ($U_{NO}$), bei den

3

Kohlenstoff-Katalysatoren, die nur gering mit Wasserdampf aktiviert wurden (Aktivierungsgrad 5% bis 15%), am größten ist. Die zufällige mittlere Reflexion $\overline{R}_r$ liegt im Bereich von 4,5 bis 5,5%.

## Ansprüche

1. Verfahren zur Herstellung eines Kohlenstoff-Katalysators für die $NO_x$-Reduktion mit Ammoniak, bei dem gemahlene und oxidierte Steinkohle mit Bindemitteln vermischt, geformt, bei Temperaturen zwischen 700 und 900°C geschwelt und anschließend mit Wasserdampf aktiviert wird, dadurch gekennzeichnet, daß die Aktivierung mit Wasserdampf bei einer Temperatur von 800 bis 850°C und einer Verweilzeit von 45 bis 100 Minuten durchgeführt wird, bis ein Aktivierungsgrad von 5 bis 15% erhalten wird.

2. Verwendung des nach Anspruch 1 hergestellten Kohlenstoff-Katalysators zur $NO_x$-Reduktion mit Ammoniak.

## Claims

1. A process for producing a carbon catalyst for $NO_x$ reduction with ammonia, in which ground and oxidized coal is mixed with binders, shaped, carbonized at temperatures of between 700 and 900°C and then activated with steam, characterized in that the activation with steam is carried out at a temperature of from 800 to 850°C and with a dwell period of from 45 to 100 minutes, until a degree of activation of from 5 to 15% is obtained.

2. Use of the carbon catalyst produced according to Claim 1 for $NO_x$ reduction with ammonia.

## Revendications

1. Procédé de production d'un catalyseur à carbon pour la réduction d'$NO_x$ à l'ammoniaque au cours duquel du charbon broyé et oxydé et mélangé avec des liants, mis en forme, passé à la carbonisation à basse température entre 700 et 900°C, et ensuite à une activation à la vapeur d'eau, caractérisé en ce que l'activation à la vapeur d'eau se fait à une température entre 800 et 850°C, la période de séjour étant de 45 à 100 minutes, jusqu'à ce qu'un dégrée d'activation de 5 à 15% soit obtenu.

2. Utilisation d'un catalyseur à carbone fabriqué selon la revendication 1 pour la réduction d'$NO_x$ à l'ammoniaque.